Europäisches Patentamt

European Patent Office

Office européen des brevets

(11) Publication number: **0 142 897**
**B1**

## EUROPEAN PATENT SPECIFICATION

(45) Date of publication of patent specification: **16.03.88**

(51) Int. Cl.⁴: **G 11 B 23/087**

(21) Application number: **84201649.5**

(22) Date of filing: **14.11.84**

(54) Magnetic-tape cassette.

(30) Priority: **17.11.83 NL 8303943**

(43) Date of publication of application:
**29.05.85 Bulletin 85/22**

(45) Publication of the grant of the patent:
**16.03.88 Bulletin 88/11**

(84) Designated Contracting States:
**DE FR GB**

(56) References cited:
**EP-A-0 052 479**
**DE-A-3 150 317**
**GB-A-2 020 630**
**US-A-4 302 787**

**PATENTS ABSTRACTS OF JAPAN, vol.5, no.64**
**(P-59)(736) April 30, 1981**

(73) Proprietor: **N.V. Philips' Gloeilampenfabrieken**
**Groenewoudseweg 1**
**NL-5621 BA Eindhoven (NL)**

(72) Inventor: **Beyersbergen van Henegouwen,**
**Cornelis Martin**
**c/o INT. OCTROOIBUREAU B.V. Prof. Holstlaan 6**
**NL-5656 AA Eindhoven (NL)**
Inventor: **Koken, Karel Gerardus Maria**
**c/o INT. OCTROOIBUREAU B.V. Prof. Holstlaan 6**
**NL-5656 AA Eindhoven (NL)**
Inventor: **Olierook, John Cornelius Joseph**
**c/o INT. OCTROOIBUREAU B.V. Prof. Holstlaan 6**
**NL-5656 AA Eindhoven (NL)**

(74) Representative: **Smit, Frederik Jan et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a magnetic-tape cassette having a housing which comprises two substantially parallel major walls each having two openings for the passage of drive spindles of a magnetic-tape cassette apparatus, substantially parallel first and second side walls, a rear wall and a front wall along which part of a magnetic tape extends, and a front cover comprising a major portion which, when said cover is in the closed position, covers said part of the magnetic tape, and first and second cover flanges which are situated one on each side of the major portion adjacent said first and second side walls respectively and which are pivotally connected to said side walls, the front cover being pivotable about a pivotal axis perpendicular to said side walls from the closed position to a first open position in which the major portion of the cover is situated near one of the major walls of the housing or to a second open position in which said major portion is situated near the other of said major walls, latching means being provided for latching the front cover in the closed position.

A magnetic-tape cassette of the above type is disclosed in the Applicants' Patent Specification US—A—4235395. The front cover of this known magnetic-tape cassette is latched in the closed position by a spring-loaded slide which is slid onto the housing. The slide is slidable in a direction perpendicular to the front wall of the housing and has two funnel-shaped recesses which position projections on the cover flanges in an end position of the slide and thus act as latching means to latch the front cover in the closed position. In order to release the front cover the slide must be slid away from the front wall of the housing. This movement can be performed in a reliable manner only by simultaneously exerting pressure on the slide at two locations near the two side walls of the housing. For this movement of the slide and hence for unlatching the front cover a comparatively bulky mechanism is required on the magnetic-tape-cassette apparatus, whilst for a correct co-operation with the actuating mechanism the known cassette is preferably inserted into the apparatus with the front wall facing the apparatus.

It is the object of the invention to enable the unlatching of the front cover of such a magnetic-tape cassette to be actuated at a location near just one side wall of the housing.

To this end the invention is characterized in that in the side facing the adjacent side wall of the housing, each of the cover flanges is formed with a recess which extends arcuately about the pivotal axis of the front cover, the latching means comprise first and second spring-loaded latching projections which are situated near the first and second side wall respectively of the case-cassette housing and are movable independently into and out of the recesses in the first and second cover flanges respectively in directions substantially perpendicular to the side walls, in the closed position of the front cover the latching projections are each engaged in a first end portion of the recess in the respective cover flange and together retain the cover in the closed position, and the recesses in the cover flanges are so arranged that when projected onto a plane perpendicular to the pivotal axis of the front cover they are substantially mirror-symmetrical relative to each other about a plane containing said pivotal axis and extending parallel to the major walls of the housing and said first end portions of the recesses overlap each other.

Thus, the front cover can be unlatched by moving one of the latching projections out of the recess in the adjacent cover flange. Since the other latching projection can now slide in the recess in the other cover flange, the front cover can now be pivoted into one of the open positions. For swinging the cover into the other open position it is necessary only to move the other latching projection out of the respective recess, since now the first latching projection can slide in the associated recess. In the latched position the two latching projections, which are each situated in an end portion of the associated recess, ensure that a stable latching is obtained. Thus, for unlatching the front cover of a magnetic-tape cassette in accordance with the invention, it is sufficient to actuate the latching projection corresponding to the direction in which the cover is to be pivoted. This enables the magnetic-tape cassette to be used in a magnetic-tape-cassette apparatus in which space for unlatching the front cover is available at only one location inside the apparatus. This is the case, for example, in an apparatus into which the cassette has to be inserted with one of the side walls of the cassette housing, facing the apparatus. It is then also of advantage that the cover can be opened in such a manner that in the open position it occupies only a small amount of additional space adjacent the relevant major wall of the cassette housing. A further advantage is that for latching the front cover a simple construction comprising only a few parts is required, so that this construction is particularly suitable for mass-manufactured magnetic-tape cassettes.

It is to be noted that US—A—4,302,787 proposes a magnetic-tape cassette comprising cover flanges with recesses which engage projections. However, these projections do not serve for latching the front cover of this magnetic-tape cassette; they are intended for limiting the pivotal movement of the cover towards the open position and for urging the cover towards the closed position through a spring construction.

A preferred embodiment of the invention is characterized in that the recess in each cover flange extends through an arc of approximately 90° about the pivotal axis, and the end wall of a second end portion of each recess remote from the first end portion thereof limits the pivotal movement of the front cover in one direction or the other to define the first or the second open position. Thus, after the first latching projection has been moved out of the respective recess, the front cover can be pivoted in such a manner, unimpeded by the second latching projection, that in the open position the major portion of the front cover extends substantially parallel to the adjacent major wall of the housing.

In this respect another embodiment of the invention is characterized in that in the side facing the adjacent side wall of the housing each cover flange has a second recess which is disposed substantially diametrically opposite the second end portion of the first recess in that flange and, in which the latching projection associated with that flange engages in the first or second open position of the front cover to latch the cover in that position. The front cover is thus held in a stable position when it is open. Consequently, the magnetic tape-cassette apparatus need not be provided with means for retaining the cover in the open position.

Yet another embodiment of the invention is characterized in that the first and second latching projections are situated at the free ends of first and second resilient tongues connected to the first and second side walls respectively of the housing and are engageable in the recess in the cover flanges under the influence of the spring forces exerted by the tongues. This simplifies the construction of the latching projections, which can be manufactured integrally with the side walls of the housing.

A simple lateral actuation of the relevant latching projection is possible if each tongue is provided with an actuating element which projects from a plane containing the outer surface of the side wall to which the tongue is connected.

A magnetic-tape cassette in accordance with the invention will now be described in more detail, by way of example, with reference to the drawing. In the drawing:

Fig. 1 is a perspective view of a magnetic tape cassette in accordance with the invention with the front cover in one of the open positions;

Fig. 2 is a perspective view of this cassette with the front cover in the closed position;

Fig. 3A and 3B are side views, drawn to an enlarged scale, of the front end portions of the left-hand and right-hand side walls respectively of the cassette housing and the adjacent flanges of the front cover;

Fig. 4 shows the front end portion of the left-hand side wall with the front cover in a first open position;

Fig. 5 shows the front end portion of the right-hand side wall with the front cover in a second open position;

Fig. 6 is a plan view looking in the direction of the arrow VI in Fig. 3A;

Fig. 7 is a plan view looking in the direction of the arrow VII in Fig. 4;

Fig. 8 is a perspective view of a magnetic-tape cassette in accordance with the invention partly inserted in one type of magnetic-tape-cassette apparatus; and

Fig. 9 is a perspective view of a magnetic-tape cassette in accordance with the invention partly inserted in another type of magnetic-tape-cassette apparatus.

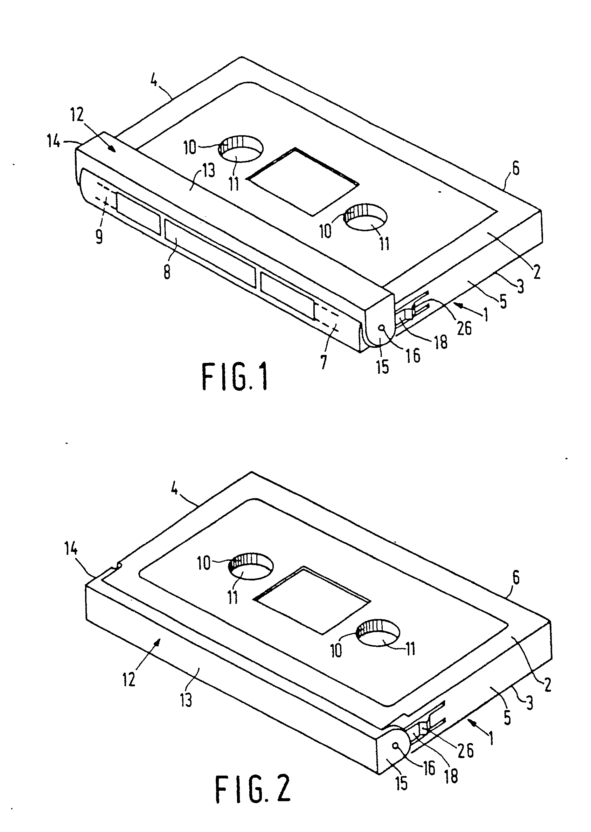

The magnetic-tape cassette shown in Figs. 1 and 2 comprises a housing having two substantially parallel rectangular major walls 2 and 3. The housing 1 further comprises two substantially parallel rectangular side walls 4 and 5, a rear wall 6, and a front wall 7 which extends parallel to this rear wall. The front wall 7 is formed with three front openings 8. Part of magnetic tape 9 extends tautly along the front wall 7 in the area behind the front openings 8 to cooperate with components, not shown, of a magnetic-tape-cassette apparatus. These components comprises, for example, magnetic heads, a pressure roller and a capstan. In a manner not shown the magnetic tape 9 is wound on two hubs 10 which are mounted for rotation between the two major walls 2 and 3. For the transmission of drive to the hubs 10 two circular openings 11 are formed in both the major wall 2 and the major wall 3. Drive spindles, not shown, of a magnetic-tape-cassette apparatus can pass through the openings 11. This construction of the cassette may be compared with the customary construction of the so-called "Compact Cassette". The cassette shown in the drawings further comprises a front cover 12, which has an elongate major portion 13 which, in the closed position of the cover, as shown in Fig. 2 covers the part of the magnetic tape 9 which extends along the front wall 7. On each side of the major portion 13 the cover 12 comprises a cover flange 14 respectively 15, which cover flanges are situated adjacent the side walls 4 and 5 respectively and are pivotally connected to the side walls by means of journals 16 on these side walls. The common axis 16a of the journals 16 forms the pivotal axis of the front cover and extends perpendicularly to the side walls 4 and 5. By pivoting the front cover about the pivotal axis 16a this cover can be moved to a first open position as shown in Figs. 1, 4 and 7 or to a second open position as shown in Fig. 5.

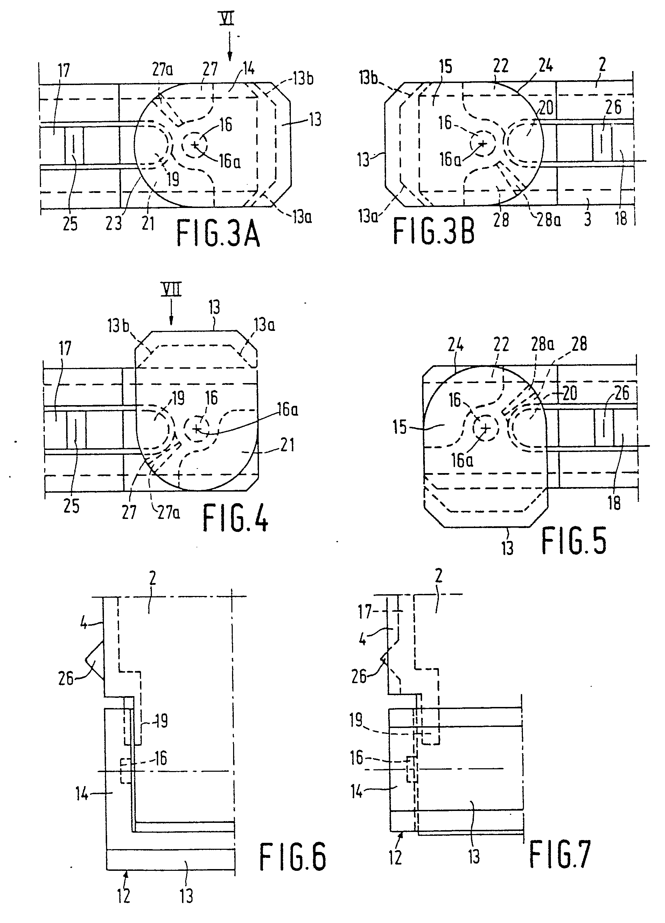

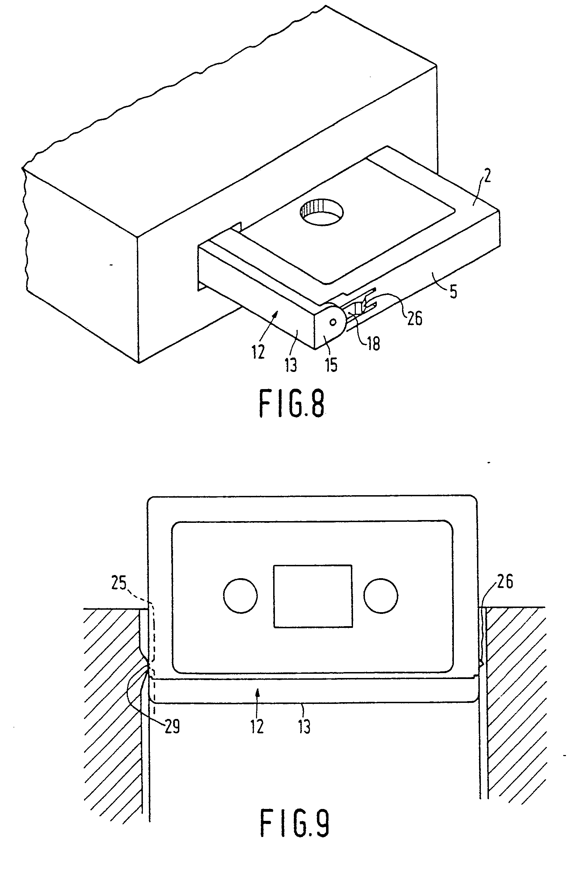

In each of the side walls 4 and 5 a resilient tongue 17, 18 is formed which extends longitudinally of the side wall, parallel to the major walls 2 and 3, and which is integral with the cassette housing. The end of each tongue which is nearer the rear wall 6 is connected to the relevant side wall. The resilience of the tongue is determined by the choice of the material of the housing. A projection 19 and 20 respectively is formed on the free end of each tongue 17 and 18, which is the end nearer the front wall 7. By deflection of the respective tongue 17 or 18, each projection 19 and 20 is movable substantially perpendicularly to the relevant side wall. The tongues 17 and 18 act as leaf springs to urge the projections 19 and 20 against the inner sides of the cover flanges 14 and 15 respectively. In the closed position of the front cover 12 each projection 19 and 20 engages in a first end portion of a recess 21, 22 respectively in the inner side of the adjacent cover flange 14 or 15. The recesses 21 and 22 extend arcuately about the pivotal axis 16a and open out of semi-circular edge portions 23 and 24 of the cover flanges 14 and 15 respectively, in the radial direction, the edge portions 23 and 24 being concentric with the recesses 21 and 22. As is shown in Figs. 3A and 3B oblique edge portions 13a and 13b of the major portion 13 of the front cover 12 preferably effectively abut the front edges of the major walls 2 and 3 respectively in the closed position of the front cover. In the closed position the front cover is latched against movement to either of the two open positions by the action of the projections 19 and 20, which function as latching projections. For this purpose the recesses 21 and 22 are so arranged that when projected onto a plane perpendicular to the pivotal axis 16a they are mirror-symmetrical relative to each other about a plane containing the axis 16a and extending parallel to the major walls 2 and 3 of the cassette housing, said first end portions of the recesses overlapping each other in this projection (compare Figs. 3A and 3B). In the closed position of the front cover the projection 19 abuts the end wall of the first end portion of the recess 21, whilst the projection 20 abuts the end wall of the first end portion of the recess 22, thereby ensuring a stable positioning of the front cover 12. Owing to the mirror-symmetrical arrangement of the recesses 21 and 22 it is possible to release the front cover 12 for pivotal movement into one of the two open positions by pressing in only one of the projections 19 and 20. For actuating the projections the tongues 17 and 18 are provided with actuating elements 25 and 26 respectively, which elements, shown in particular in Figs. 6 and 7, project from planes containing the outer surfaces of the side walls 4 and 5 respectively of the cassette housing. By pressing the actuating element 25 or 26 inwards in the magnetic-tape-cassette apparatus the associated projection 19 or 20 is disengaged from the respective recess 21 or 22. If the projection 19 is disengaged the cover 12 can pivot to the first open position as shown in Fig. 4, the projection 20 sliding freely in the recess 22; if the projection 20 is disengaged the cover 12 can pivot to the second open position as shown in Fig. 5, the projection 19 sliding in the recess 21. In this respect it is of advantage if each recess extends through an arc of approximately 90° about the pivotal axis 16a, so that the end wall of a second end portion of the recess remote from the first end portion thereof limits the pivotal movement of the cover correspondingly in one or the other direction to define the first or second open position respectively. Moreover, it is of advantage if the inner side of each cover flange 14 and 15 is formed with a second recess 27, 28 respectively which is situated substantially diametrically opposite the second end portion of the first recess 21 or 22 in the respective cover flange and opens out of the semi-circular edge portion 23 or 24 of the flange and in which the respective projection 19 or 20 can engage when the cover 12 is swung into the first or the second open position respectively. In this way the cover is latched effectively in the open positions. To facilitate the disengagement of the relevant projection 19 or 20 from the recess 27 or 28 when the front cover 12 is to be returned to the closed position, each second recess 27 and 28 is bounded by a ramp 27a and 28a respectively at the side adjacent the first end portion of the associated first recess 21 or 22.

The front cover 12 of a magnetic-tape cassette in accordance with the invention has the advantage that a stable latching in the closed positions of the cover is obtained, whilst pressing in only one of the actuating elements 25 or 26 is sufficient to release the cover 12 for movement in the desired direction. This is of special advantage in reversible cassettes, which can be placed on or in a magnetic-tape-cassette apparatus with the openings 11 in either of the two major walls 2 and 3 of the cassette housing 1 positioned to receive the drive spindles of the apparatus. A further advantage is that the housing 1 may have a symmetrical construction and that on the housing, of which the tongues 17 and 18 with the projections 19 and 20 form integral parts, only one separate part has to be mounted, namely the front cover 12. When the relevant actuating element 25 or 26 is pressed in it is always ensured that the cover can pivot in one direction only, so that no undesired movements of the cover are possible. The space occupied by the cover in the open position above or below the housing respectively is small, so that in the apparatus only a comparatively small space is necessary for the movement of the cover to the first or the second open position. The cassette shown may be employed, for example, for digital audio recording on magnetic tapes, for which purpose the housing must be sealed effectively against the penetration of dust and other contaminants when the cassette is not in use. As is shown in Figs. 8 and 9, the cassette in accordance with the invention can be inserted in different ways into a magnetic-tape-cassette apparatus. Fig. 8 shows the cassette being inserted with one of the side walls of the cassette housing, in this case the side wall 4, facing the apparatus. A stop inside the apparatus then presses the actuating element 25 inwards to disengage the projection 19 from the recess 21 so that the cover 12 can be swung into the first open position in the apparatus. This is particularly suitable for equipment used in cars, in which the cassette is generally inserted in this way. Fig. 9 shows that the cassette can also be inserted with a long side facing the apparatus, one or the other of the actuating elements 25 and 26, in this case the element 25, being actuated during the insertion by a projection 29 inside the apparatus. During the passage of the relevant actuating element past the projection 29 the cover can be swung into the relevant open position.

**Claims**

1. A magnetic-tape cassette having a housing which comprises two substantially parallel major walls (2, 3) each have two openings (11) for the passage of drive spindles of a magnetic-tape-cassette apparatus, substantially parallel first and second side walls (4, 5), a rear wall (6) and a front wall (7) along which part of a magnetic tape (9) extends, and a front cover (12) comprising a major portion (13) which, when said cover (12) is in the closed position, covers said part of the magnetic tape (9), and first and second cover flanges (14, 15) which are situated one on each side of the major portion (13) adjacent said first and second side walls (4, 5) respectively and which are pivotally connected to said side walls (4, 5), the front cover (12) being pivotable about a pivotal axis (16a) perpendicular to said side walls (4, 5) from the closed position to a first open position in which the major portion (13) of the cover (12) is situated near one of the major walls (2, 3) of the housing or to a second open position in which said major portion (13) is situated near the other of said major walls (2, 3), latching (17—28) means being provided for latching the front cover (12) in the closed position, characterized in that

— in the side facing the adjacent side wall (4, 5) of the housing, each of the cover flanges (14, 15) is formed with a recess (21, 22) which extends arcuately about the pivotal axis (16a) of the front cover (12),

— the latching means (17—28) comprise first and second spring-loaded latching projections (19, 20) which are situated near the first and second side walls (4, 5) respectively of the cassette housing and are movable independently into and out of the recesses (21, 22) in the first and second cover flanges (14, 15) respectively in directions substantially perpendicular to the side walls (4, 5),

— in the closed position of the front cover (12) the latching projections (19, 20) are each engaged in a first end portion of the recess (21, 22) in the respective cover flange (14, 15) and together retain the cover (12) in the closed position, and

— the recesses (21, 22) in the cover flanges (14, 15) are so arranged that when projected onto a plane perpendicular to the pivotal axis (16a) of the front cover (12) they are substantially mirror-symmetrical relative to each other about a plane containing said pivotal axis (16a) and extending parallel to the major walls (2, 3) of the housing, and said first end portions of the recesses (21, 22) overlap each other.

2. A magnetic-tape cassette as claimed in Claim 1, characterized in that the recess (21, 22) in each cover flange (14, 15) extends through an arc of approximately 90° about the pivotal axis (16a) and the end wall of a second end portion of each recess (21, 22) remote from the first end portion thereof limits the pivotal movement of the front cover (12) in one direction or the other to define the first or the second open position respectively.

3. A magnetic-tape cassette as claimed in Claim 2, characterized in that in the side facing the adjacent side wall (4, 5) of the housing each cover flange (14, 15) has a second recess (27, 28) which is disposed substantially diametrically opposite the second end portion of the first recess (21, 22) in that flange (14, 15) and in which the latching projection (19, 20) associated with that flange (14, 15) engages in the first or second open position respectively of the front cover (12) to latch the cover (12) in that position.

4. A magnetic-tape cassette as claimed in Claim 3, characterized in that each cover flange (14, 15) has a semi-circular edge portion (23, 24) concentric with the first recess (21, 22) in the flange, and the two recesses (21, 22, 27, 28) in each cover flange (14, 15) open out of this edge portion of the cover flange (14, 15) in the radial direction.

5. A magnetic-tape cassette as claimed in any of the preceding Claims, characterized in that the first and second latching projections (19, 20) are situated at the free ends of first and second resilient tongues (17, 18) connected to the first and second side walls (4, 5) respectively of the housing and are engageable in the recesses (21, 22, 27, 28) in the cover flanges (14, 15) under the influence of the spring forces exerted by the tongues (17, 18).

6. A magnetic-tape cassette as claimed in Claim 5, characterized in that each tongue (17, 18) is provided with an actuating element (25, 26) which projects from a plane containing the outer surface of the side wall (4, 5) to which the tongue (17, 18) is connected.

7. A magnetic-tape cassette as claimed in Claim 5 or 6, characterized in that each tongue (17, 18) extends longitudinally of the respective side wall (4, 5) of the housing, parallel to the two major walls (2, 3), and is connected to said side wall (4, 5) at the end of the tongue (17, 18) which is remote from the associated latching projection (19, 20).

**Patentansprüche**

1. Magnetbandkassette mit einem Gehäuse, das zwei sich im wesentlichen parallel zueinander erstreckende Hauptwände (2, 3) aufweist, die je zwei Öffnungen (11) zum Hindurchführen von Antriebsspindeln eines Magnetbandkassettengerätes aufweisen, weiterhin eine erste und eine zweite Seitenwand (4, 5), die sich im wesentlichen parallel zueinander erstrecken, eine Rückwand (6) und eine Vorderwand (7), an der entlang ein Teil eines Magnetbandes (9) sich erstreckt, sowie eine Kassettenklappe (12) mit einem Hauptteil (13), der im geschlossenen Zustand der Kassettenklappe (12) den genannten Teil des Magnetbandes (9) bedeckt, sowie mit ersten und zweiten Klappenflanschen (14, 15), die je an einer Seite des Hauptteils (13) neben den betreffenden ersten bzw. zweiten Seitenwänden (4, 5) liegen und die mit den genannten Seitenwänden (4, 5) drehbar verbunden sind, wobei die Kassettenklappe (12) um eine Schwenkachse (16a) senkrecht zu den genannten Seitenwänden (4, 5) aus der geschlossenen Lage in eine erste offene Lage schwenkbar ist, in der der Hauptteil (13) der Kassettenklappe (12) in der Nähe einer der Hauptwände (2, 3) des Gehäuses liegt oder in eine zweite offene Lage, in der der genannte Hauptteil (13) in der Nähe der anderen der genannten Hauptwände (2, 3) liegt, und wobei Verriegelungsmittel (17—28) vorgesehen sind zum Verriegeln der Kassettenklappe (12) in der geschlossenen Lage, dadurch gekennzeichnet, dass

— in der der benachbarten Seitenwand (4, 5) des Gehäuses zugewandten Seite jeder der Klappenflansche (14, 15) mit einer Ausnehmung (21, 22) ausgebildet ist, die sich bogenförmig um die Schwenkachse (16a) der Kassettenklappe (12) erstreckt,

— die Verriegelungsmittel (17—28) einen ersten und einen zweiten federbelasteten Verriegelungsnocken (19, 20) aufweisen, die je in der Nähe der ersten bzw. zweiten Seitenwand (4, 5) der Kassettengehäuses liegen und die unabhängig voneinander in die und aus den Ausnehmungen (21, 22) in dem ersten bzw. zweiten Klappenflansch (14, 15) schiebbar sind und zwar in einer Richtung im wesentlichen senkrecht zu den Seitenwänden (4, 5),

— in der geschlossenen Lage der Kassettenklappe (12) die Verriegelungsnocken (19, 20) mit je einem ersten Endteil der Ausnehmung (21, 22) in dem betreffenden Klappenflansch (14, 15) zusammenarbeiten und zusammen die Kassettenklappe (12) in der geschlossenen Lage halten und

— die Ausnehmungen (21, 22) in den Klappenflanschen (14, 15) derart vorgesehen sind, dass sie in Projektion auf eine Ebene senkrecht zu der Schwenkachse (16a) der Kassettenklappe (12) gegenüber einander um eine Ebene, in der die genannte Schwenkachse (16a) liegt, nahezu spiegelsymmetrisch sind und sich parallel zu den Hauptwänden (2, 3) des Gehäuses erstrecken und wobei die ersten Endteile der Ausnehmungen (21, 22) sich überlappen.

2. Magnetbandkassette nach Anspruch 1, dadurch gekennzeichnet, dass die Ausnehmung (21, 22) in jedem Klappenflansch (14, 15) sich über einen Bogen von etwa 90° um die Schwenkachse (16a) erstreckt und die Endwand eines zweiten Endteils jeder Ausnehmung (21, 22) in einem Abstand von dem ersten Endteil derselben die Schwenkbewegung der Kassettenklappe (12) in der einen Richtung oder in der anderen Richtung beschränkt um die erste bzw. zweite geöffnete Lage zu definieren.

3. Magnetbandkassette nach Anspruch 2, dadurch gekennzeichnet, dass in der Seite, die der benachbarten Seitenwand (4, 5) des Gehäuses zugewandt ist, jeder Klappenflansch (14, 15) eine zweite Ausnehmung (27, 28) aufweist, die im wesentlichen diametral gegenüber dem zweiten Endteil der ersten Ausnehmung (21, 22) in diesem Flansch (14, 15) liegt und mit der der Verriegelungsnocken (19, 20), der diesem Flansch (14, 15) zugeordnet ist, in der ersten oder zweiten offenen Lage der Kassettenklappe (12) zusammenarbeitet um die Kassettenklappe (12) in dieser Lage zu verriegeln.

4. Magnetbandkassette nach Anspruch 3, dadurch gekennzeichnet, dass jeder Klappenflansch (14, 15) einen halbkreisförmigen Randteil (23, 24) aufweist, der zu der ersten Ausnehmung (21, 22) in dem Flansch konzentrisch ist und die zwei Ausnehmungen (21, 22, 27, 28) in jedem Klappenflansch (14, 15) zu diesem Endteil des Klappenflansches (14, 15) in radialer Richtung offen sind.

5. Magnetbandkassette nach einem der vorstehenden Ansprüche, dadurch gekennzeichnet, dass der erste und zweite Verriegelungsnocken (19, 20) bei dem freien Ende einer ersten bzw. zweiten Federzunge (17, 18) liegt, die mit der ersten bzw. zweiten Seitenwand (4, 5) des Gehäuses verbunden ist und mit den Ausnehmungen (21, 22, 27, 28) in dem Klappenflansch (14, 15) unter dem Einfluss der Federkräfte der Zungen (17, 18) zusammenarbeiten kann.

6. Magnetbandkassette nach Anspruch 5, dadurch gekennzeichnet, dass jede Zunge (17, 18) mit einem Betätigungselement versehen ist, das aus einer Ebene, in der die Aussenfläche der Seitenwand (4, 5) liegt, mit der die Zunge (17, 18) verbunden ist, hervorragt.

7. Magnetbandkassette nach Anspruch 5 oder 6, dadurch gekennzeichnet, dass jede Zunge (17, 18) sich in der Längsrichtung der betreffenden Seitenwand (4, 5) des Gehäuses erstreckt, und zwar parallel zu den zwei Hauptwänden (2, 3) und an dem von dem zugeordneten Verriegelungsnocken (19, 20) abgewandten Ende der Zunge (17, 18) mit der genannten Seitenwand (4, 5) verbunden ist.

**Revendications**

1. Cassette de bande magnétique comportant un boîtier qui comprend deux parois principales (2, 3) en substance parallèles présentant chacune deux ouvertures (11) pour le passage des axes d'entraînement d'un appareil à cassette de bande magnétique, une première et une seconde paroi latérale (4, 5) en substance parallèles, une paroi postérieure (6) et une paroi antérieure (7) le long de laquelle s'étend une partie d'une bande magnétique (9) et un volet antérieur (12) comprenant une partie principale (13) qui, lorsque le volet (12) est dans la position de fermeture, couvre la dite partie de la bande magnétique (9), et une première ainsi qu'une seconde joue de volet (14, 15) qui sont situées respectivement de part et d'autre de la partie principale (13) près de la première et de la seconde paroi latérale (4, 5), respectivement, et qui sont articulées aux parois latérales (4, 5), le volet antérieur (12) pouvant pivoter autour d'un axe de pivotement (16a) perpendiculaire aux parois latérales (4, 5) à partir de la position de fermeture vers une première position d'ouverture, dans laquelle la partie principale (13) du volet (12) est située près d'une des parois principales (2, 3) du boîtier, ou vers une seconde position d'ouverture, dans laquelle la partie principale (13) est située près de l'autre des parois principales (2, 3), des moyens de verrouillage (17—28) étant prévus pour verrouiller le volet antérieur (12) dans la position de fermeture, caractérisée en ce que

— dans le côté tourné vers la paroi latérale (4, 5) adjacente du boîtier, chacune des joues (14, 15) du volet présente un évidement (21, 22) qui s'étend en arc de cercle autour de l'axe de pivotement (16a) du volet antérieur (12),

— les moyens de verrouillage (17—28) comprennent une première et une seconde saillie de verrouillage formant ressort (19, 20) qui sont situées près de la première et de la seconde paroi latérale (4, 5), respectivement, du boîtier de cassette et qui sont mobiles indépendamment des les évidements (21, 22) de la première et de la seconde joue de volet (14 et 15), respectivement, et hors de ceux-ci dans des directions en substance perpendiculaires aux parois latérales (4, 5),

— dans la position de fermeture du volet antérieur (12), les saillies de verrouillage (19, 20) sont chacune engagées dans une première partie d'extrémité de l'évidement (21, 22) dans la joue de volet (14, 15) correspondante et retiennent ensemble le volet (12) dans la position de fermeture, et

— les évidements (21, 22) prévus dans les joues (14, 15) du couvercle sont disposés de telle sorte que lorsqu'ils sont projetés sur un plan perpendiculaire à l'axe de pivotement (16a) du volet antérieur (12), ils sont en substance énantiomorphes l'un par rapport à l'autre de part et d'autre d'un plan passant par l'axe de pivotement (16a) et s'étendant parallèlement aux parois principales (2, 3) du boîtier, et les premières parties d'extrémité des évidements (21, 22) se chevauchent mutuellement.

2. Cassette de bande magnétique suivant la revendication 1, caractérisée en ce que l'évidement (21, 22) prévu dans chaque joue de volet (14, 15) s'étend suivant un arc d'environ 90° autour de l'axe de pivotement (16a) et la paroi d'extrémité d'une seconde partie d'extrémité de chaque évidement (21, 22) éloignée de sa première partie d'extrémité limite le mouvement de pivotement du volet antérieur (12) dans une direction ou dans l'autre pour définir respectivement la première ou la seconde position d'ouverture.

3. Cassette de bande magnétique suivant la revendication 2, caractérisée en ce que, dans le côté tourné vers la paroi latérale (4, 5) adjacente du boîtier, chaque joue (14, 15) du volet présente un second évidement (27, 28) disposé en substance en un endroit diamétralement opposé à la seconde partie d'extrémité du premier évidement (21, 22) dans cette joue (14; 15) et dans lequel la saillie de verrouillage (19, 20) associée à cette joue (14, 15) s'engage, dans la première ou la seconde position d'ouverture respective du volet antérieur (12), pour verrouiller le volet (12) dans cette position.

4. Cassette de bande magnétique suivant la revendication 3, caractérisée en ce que chaque joue (14, 15) du volet comporte un bord semicirculaire (23, 24) concentrique au premier évidement (21, 22) prévu dans la joue et les deux évidements (21, 22, 27, 28) de chaque joue (14, 15) du volet s'ouvrent à partir de ce bord de la joue (14, 15) du volet dans la direction radiale.

5. Cassette de bande magnétique suivant l'une quelconque des revendications précédentes, caractérisée en ce que la première et la seconde saillie de verrouillage (19, 20) sont situées aux extrémités libres d'une première et d'une seconde languette élastique (17, 18) reliées respectivement à la première et à la seconde paroi latérale (4, 5) du boîtier et peuvent être engagées dans les évidements (21, 22, 27, 28) des joues (14, 15) du volet sous l'influence des forces élastiques exercées par les languettes (17, 18).

6. Cassette de bande magnétique suivant la revendication 5, caractérisée en ce que chaque languette (17, 18) est pourvue d'un élément d'actionnement (25, 26) qui fait saillie à partir d'un plan passant par la surface extérieure de la paroi latérale (4, 5) à laquelle la languette (17, 18) est reliée.

7. Cassette de bande magnétique suivant la revendication 5 ou 6, caractérisée en ce que chaque languette (17, 18) s'étend longitudinalement par rapport à la paroi latérale (4, 5) correspondante du boîtier, parallèlement aux deux parois principales (2, 3) et est reliée à cette paroi latérale (4, 5) à l'extrémité de la languette (17, 18) qui est éloignée de la saillie de verrouillage (19, 20) associée.

FIG.1

FIG.2

0 142 897

FIG.3A

FIG.3B

FIG.4

FIG.5

FIG.6

FIG.7

2

FIG.8

FIG.9